# EUROPEAN PATENT SPECIFICATION

(11) **EP 4 580 209 B1**
(45) Date of publication and mention of the grant of the patent: **16.09.2026**
(21) Application number: 24217804.4
(22) Date of filing: 05.12.2024
(51) Int. Cl.: H04Q 9/00, H04L 7/00, H04N 23/60, B60W 50/023

(54) **METHOD AND COMPONENT FOR SYNCHRONIZING PLURALITY OF SYSTEMS**
VERFAHREN UND KOMPONENTE ZUR SYNCHRONISIERUNG MEHRERER SYSTEME
PROCÉDÉ ET COMPOSANT POUR SYNCHRONISER UNE PLURALITÉ DE SYSTÈMES

(30) Priority: 20.12.2023 CN 202311764796
(43) Date of publication of application: 02.07.2025
(73) Proprietor: GeniTech Co.,Ltd, Hefei City, Anhui Province (CN)
(72) Inventor: LIU, Can, Jiading District, Shanghai, 201804 (CN); YANG, Jian, Jiading District, Shanghai, 201804 (CN)
(74) Representative: Vossius & Partner Patentanwälte Rechtsanwälte mbB

(56) References cited:
- CN-A- 117 002 415
- US-A1- 2021 099 628
- US-A1- 2022 182 213
- US-B1- 11 818 329

## Description

### TECHNICAL FIELD

The disclosure relates to the field of system control, and in particular to a method and a component for synchronizing a plurality of systems, a computer-readable storage medium, an electronic device, an autonomous driving system, and a vehicle.

### BACKGROUND ART

In some scenarios, a plurality of sensors are required to perform sensing to obtain sensed data, which needs to be simultaneously transmitted to a primary system for processing and also replicated and sent to a backup system, so that when the primary system fails, the backup system can switch to become the primary system to take over. However, in some scenarios with high synchronization requirements for sensed data (e.g., image and video acquisition by a plurality of cameras during vehicle driving), there may be a deviation in the synchronization time between the backup system and the primary system, making it impossible to effectively perform timing control and alignment, which may easily cause problems such as discontinuity or loss between the sensed data of the system after the primary-backup switch and the sensed data of the system before the switch.

Document US 11 818 329 B1 (JAIN ASHISH [AU] ET AL) 14 November 2023 (2023-11-14) discloses an autonomous vehicle comprising redundant systems with multiple sensors. This prior art further discloses synchronizing of stereoscopic cameras. Lack of synchronization or a failure are detected by the difference of time stamps captured when image data arrives at a processor. To compensate time difference padding data of the image capture is adjusted.

### SUMMARY

In view of the problems described above, the disclosure is intended to provide a method and a component for synchronizing a plurality of systems, a computer-readable storage medium, an electronic device, an autonomous driving system, and a vehicle.

According to a first aspect of the disclosure, a method for synchronizing a plurality of systems is provided. The method is used for synchronization of control timing of N sensors across the plurality of systems, where the plurality of systems include one primary system and one or more backup systems, and each of the plurality of systems includes one common trigger source and N synchronizing signal generators corresponding to the N sensors, the common trigger source providing a trigger signal for the N synchronizing signal generators, and the N synchronizing signal generators providing synchronizing signal control for the corresponding N sensors, with N being a positive integer greater than or equal to 1. The method includes the following steps, step S1: determining, for one of the N sensors and based on data received from the sensor by one of the one or more backup systems, a first time point for a portion of the data; step S2: determining a generation time of a trigger signal from a common trigger source in the primary system based on a calibrated delay amount for the sensor and the first time point; and step S3: adjusting generation times of subsequent trigger signals from common trigger sources in some or all of the one or more backup systems based on the generation time of the trigger signal from the common trigger source in the primary system.

According to some embodiments of the disclosure, optionally, the step S2 of the method further includes: determining a generation time of a synchronizing signal from the synchronizing signal generator in the primary system that corresponds to the sensor based on the calibrated delay amount for the sensor and the first time point; and determining the generation time of the trigger signal from the common trigger source in the primary system based on the generation time of the synchronizing signal in the primary system.

According to some embodiments of the disclosure, optionally, the step S3 of the method further includes: determining a difference between the generation time of the trigger signal from the common trigger source in the primary system and a generation time of a trigger signal from a common trigger source in each of the one or more backup systems based on the determined generation time of the trigger signal from the common trigger source in the primary system; and adjusting a generation time of a subsequent trigger signal from a common trigger source in the backup system for which the difference is greater than a preset threshold among the one or more backup systems, so as to align with a generation time of a corresponding subsequent trigger signal from the common trigger source in the primary system.

According to some embodiments of the disclosure, optionally, in the method, the step of determining a generation time of a trigger signal from a common trigger source in the primary system further includes: performing the steps S1 and S2 for each of the N sensors to obtain N generation times of the trigger signal from the common trigger source in the primary system; and using an average of the N generation times of the trigger signal from the common trigger source in the primary system as the generation time of the trigger signal from the common trigger source in the primary system for the step S3.

According to some embodiments of the disclosure, optionally, in the method, the step of determining a generation time of a trigger signal from a common trigger source in the primary system further includes: performing the steps S1 and S2 for each of the N sensors to obtain N generation times of the trigger signal from the common trigger source in the primary system; and removing one or more of the N generation times that differ the most from the other N-1 of the generation times; and using any one of one or more generation times remaining after the removal as the generation time of the trigger signal from the common trigger source in the primary system for the step S3, or using an average of one or more generation times remaining after the removal as the generation time of the trigger signal from the common trigger source in the primary system for the step S3.

According to some embodiments of the disclosure, optionally, in the method, the step of determining the first time point further includes: performing the step S1 for each of the one or more backup systems to obtain one or more first time points; and using an average of the obtained one or more first time points as the first time point for the step S2.

According to some embodiments of the disclosure, optionally, in the method, the step of determining the first time point further includes: performing the step S1 for each of the one or more backup systems to obtain one or more first time points; and removing one or more of the one or more first time points that differ the most from the other first time points; and using any one of one or more first time points remaining after the removal as the first time point for the step S2, or using an average of first time points remaining after the removal as the first time point for the step S2.

According to some embodiments of the disclosure, optionally, the N sensors are different types of sensors.

According to some embodiments of the disclosure, optionally, the sensor includes a camera, and the first time point for the portion of the data includes a starting time point of a frame transmitted by the camera.

According to some embodiments of the disclosure, optionally, the synchronizing signal generator includes an fsync signal generator.

According to some embodiments of the disclosure, optionally, the primary system and the one or more backup systems receive the data from the sensor via a mobile industry processor interface (MIPI).

According to some embodiments of the disclosure, optionally, the method further includes: in response to activating one of the one or more backup systems, making the activated backup system serve as a new primary system and the original primary system as a backup system.

According to a second aspect of the disclosure, a component for synchronizing a plurality of systems is provided. The plurality of systems include one primary system and one or more backup systems. The component includes: a common trigger source and N synchronizing signal generators provided in each of the plurality of systems, where the N synchronizing signal generators are used for providing, based on a trigger signal from the common trigger source and respective calibrated delay amounts for N sensors corresponding to the N synchronizing signal generators, corresponding synchronizing signal control for the N sensors, with N being a positive integer greater than or equal to 1. The component is configured to perform the following operations: determining, for one of the N sensors and based on data received from the sensor by one of the one or more backup systems, a first time point for a portion of the data; determining a generation time of a trigger signal from a common trigger source in the primary system based on a calibrated delay amount for the sensor and the first time point; and adjusting generation times of subsequent trigger signals from common trigger sources in some or all of the one or more backup systems based on the generation time of the trigger signal from the common trigger source in the primary system.

According to some embodiments of the disclosure, optionally, the component further includes: a selector that activates one of the one or more backup systems to make the activated backup system serve as a new primary system and the original primary system as a backup system.

According to a third aspect of the disclosure, a computer-readable storage medium is provided, where the computer-readable storage medium stores instructions which, when run, perform the method according to any one of the aforementioned aspects.

According to a fourth aspect of the disclosure, an electronic device is provided, including a memory and a processor, where the memory stores instructions which, when executed by the processor, implement the method according to any one of the aforementioned aspects.

According to a fifth aspect of the disclosure, an autonomous driving system is provided, including the component for synchronizing a plurality of systems according to any one of the aforementioned embodiments.

According to a sixth aspect of the disclosure, a vehicle is provided, including the component for synchronizing a plurality of systems according to any one of the aforementioned embodiments, or including the autonomous driving system according to any one of the aforementioned embodiments.

As described above, in the method for synchronizing a plurality of systems according to the disclosure, the backup system calculates a trigger time of the primary system based on the time point of the received data, so as to align with a synchronization time of the primary system, thereby alleviating or addressing problems such as discontinuity or loss between the sensed data of the system after the primary-backup switch and the sensed data of the system before the switch.

### BRIEF DESCRIPTION OF THE DRAWINGS

FIG. 1 is a flowchart of a method 100 for synchronizing a plurality of systems according to some embodiments of the disclosure; and
FIG. 2 shows a schematic module diagram 200 for synchronizing a plurality of systems according to some embodiments.

### DETAILED DESCRIPTION OF EMBODIMENTS

Some of the embodiments of the disclosure are described below and are intended to provide a basic understanding of the disclosure. They are not intended to confirm key or decisive elements of the disclosure or limit the scope of protection, which is only limited by the scope of the appended claims.

For concise and illustrative purposes, this specification mainly describes the principles of the disclosure with reference to its exemplary embodiments.

In addition, in the following description, reference is made to the accompanying drawings, which illustrate specific exemplary embodiments. Electrical, mechanical, logical, and structural changes can be made to these embodiments without departing from the scope of the disclosure as defined by the appended claims.

Furthermore, although the features of the disclosure are disclosed in combination with only one of several implementations/embodiments, if any given or recognizable function may be desired and/or advantageous, this feature can be combined with one or more other features of other implementations/embodiments. Therefore, the following description should not be considered in a limiting sense, and the scope of the disclosure is defined by the appended claims.

The terms such as "have" and "include" indicate that in addition to the units (modules) and steps that are directly and clearly described in the specification and the claims, other units (modules) and steps that are not directly or clearly described are not excluded in the technical solutions of the disclosure.

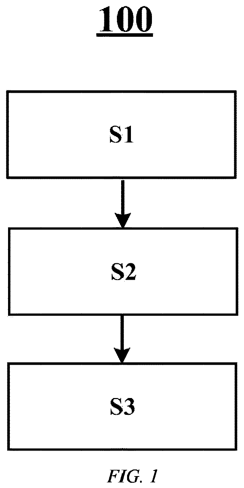

FIG. 1 is a flowchart of a method 100 for synchronizing a plurality of systems according to some embodiments of the disclosure. The method 100 is used for synchronization of control timing of N sensors across the plurality of systems, where the plurality of systems include one primary system and one or more backup systems, and each of the plurality of systems includes one common trigger source and N synchronizing signal generators corresponding to the N sensors, the common trigger source providing a trigger signal for the N synchronizing signal generators, and the N synchronizing signal generators providing synchronizing signal control for the corresponding N sensors, with N being a positive integer greater than or equal to 1.

It can be understood that in a scenario where a plurality of sensors are required to perform sensing and to collect corresponding sensed data, there is a system for takeover of control (e.g., data transmission and reception control and time synchronization control) to control or provide control timing for the operation of these sensors. However, in order to prevent the system for takeover of control from being deactivated, for example, due to a failure, a redundant design for the system can be implemented. For example, a plurality of systems are designed, in which one running system that takes over control of the sensors is a primary system, while the other systems are backup systems. The primary system receives sensed data from the sensors when it is running, and the backup systems receive the sensed data simultaneously. The primary system provides timing control for these sensors, but the backup systems do not provide timing control.

It should be noted that the terms "primary system" and "backup system" are relative to each other. That is, the system that is currently running the takeover of control is provisionally designated as the primary system. Once a switch is made from this primary system to another backup system to run the takeover of control, this another backup system becomes a new "primary system", while the original primary system becomes a new "backup system" among the aforementioned one or more backup systems.

The method 100 may include the following steps.

Step S1: Determine, for one of the N sensors and based on data received from the sensor by one of the one or more backup systems, a first time point for a portion of the data. It can be understood that any one of the N sensors is selected for subsequent calculation. Since all the backup systems can receive the data from the sensor, they can all analyze and obtain specific time points for various portions of the data, such as a starting time point for a specific data portion. For example, if video data is received, the specific time point may be a starting time point of a particular frame in the video (e.g., a starting readout time point of the frame, or a starting exposure time point of the frame) or another specific time point.

Step S2: Determine a generation time of a trigger signal from a common trigger source in the primary system based on a calibrated delay amount for the sensor and the first time point. Based on the type, factory settings, parameters, and other information for the sensor selected in the step S1, a calibrated delay amount for it can be obtained, and thus the calibrated delay amount that the synchronizing signal generator is to apply for the sensor can be determined. The common trigger source is configured to issue trigger signals at specified periods and moments. It provides the trigger signals to the synchronizing signal generators, which in turn issue timing control after performing timing/counting for specific sensors they target, thereby ensuring that the timing control of the plurality of sensors is synchronized. Therefore, the generation time of the trigger signal from the common trigger source in the primary system can be back-calculated based on the first time point and the calibrated delay amount for the selected sensor.

In some embodiments, based on the above description, the step S2 further includes: determining a generation time of a synchronizing signal from the synchronizing signal generator in the primary system that corresponds to the sensor based on the calibrated delay amount for the sensor and the first time point; and determining the generation time of the trigger signal from the common trigger source in the primary system based on the generation time of the synchronizing signal in the primary system.

Step S3: Adjust generation times of subsequent trigger signals from common trigger sources in some or all of the one or more backup systems based on the generation time of the trigger signal from the common trigger source in the primary system. After the generation time of the trigger signal from the common trigger source in the primary system is obtained, it can be compared with generation times of trigger signals from common trigger sources in some or all of the one or more backup systems with respect to the same data portion. By comparison, a difference between the generation time of the trigger signal from each backup system and the generation time of the trigger signal from the common trigger source in the primary system with respect to the same data portion can be determined, and the generation times of the subsequent trigger signals from the backup systems can be adjusted. For example, generation times with small differences may not be adjusted, while those with large differences may be adjusted. Therefore, only some of the backup systems may need to be adjusted, or all of them may need to be adjusted, or none of them may need to be adjusted.

Therefore, in some embodiments, the step S3 of the method 100 may further include: determining a difference between the generation time of the trigger signal from the common trigger source in the primary system and a generation time of a trigger signal from a common trigger source in each of the one or more backup systems based on the determined generation time of the trigger signal from the common trigger source in the primary system; and adjusting a generation time of a subsequent trigger signal from a common trigger source in the backup system for which the difference is greater than a preset threshold among the one or more backup systems, so as to align with a generation time of a corresponding subsequent trigger signal from the common trigger source in the primary system. The size of the preset threshold can be configured as needed based on the requirements for the degree of synchronization of the plurality of systems. For example, a larger preset threshold may be set in scenarios with lower requirements for synchronization accuracy, such as in-vehicle temperature sensing, while a smaller preset threshold may be set in scenarios with higher requirements for synchronization accuracy, such as image sensing during vehicle driving.

In this way, during normal system operation, the method 100 can further ensure that the primary system and the backup systems receive the sensed data simultaneously, while also providing more precise synchronization timing control. For example, in the event that the primary system fails and a switch to a backup system is required, the control timing of the sensed data in the backup system, after switching to become the primary system, can be closely aligned with that of the original primary system. This allows for a smoother primary-backup switch, thus ensuring continuous sensing, receiving, control, and use of the sensed data during the primary-backup switch. Furthermore, this improves the safety of the redundant design for the system in scenarios with high requirements for safety and real-time performance (e.g., driving data or surrounding environment sensing during vehicle driving).

In addition, the primary-backup system switch process is simpler. In terms of timing control, only one common trigger source needs to be adjusted, eliminating the need for a separate timing adjustment for each sensor. This makes the process more convenient and faster, thus reducing the computational load on the system.

For example, in the above step of determining a generation time of a trigger signal from a common trigger source in the primary system, the following determination approach may be further included: first, performing the steps S1 and S2 for each of the N sensors to obtain N generation times of the trigger signal from the common trigger source in the primary system; and then, using an average of the N generation times of the trigger signal from the common trigger source in the primary system as the generation time of the trigger signal from the common trigger source in the primary system for the step S3. That is, the disclosure may not be limited to the aforementioned calculation of the generation time (denoted as T_{M}) of the trigger signal from the common trigger source in the primary system for a selected one of the sensors; instead, T_{M} may be calculated for some or each of the N sensors, and an average of these T_{M} is then taken as the final T_{M} for subsequent steps. In this way, T_{M} may be determined based on an average calculated for some or all of the sensors, making the obtained average T_{M} of the primary system better suited to handle other potential errors caused by various types of sensors. It can be understood that in addition to the average, the median, the mode, or other types of statistical parameters may also be applied as needed.

For example, in the above step of determining a generation time of a trigger signal from a common trigger source in the primary system, the following determination approach may be further included: first, performing the steps S1 and S2 for each of the N sensors to obtain N generation times of the trigger signal from the common trigger source in the primary system; and then, removing (e.g., deleting) one or more of the N generation times that differ the most from the other N-1 of the generation times; and finally, using any one of one or more generation times remaining after the removal as the generation time of the trigger signal from the common trigger source in the primary system for the step S3, or using an average of one or more generation times remaining after the removal as the generation time of the trigger signal from the common trigger source in the primary system for the step S3. In some scenarios, some of the sensors may fail, resulting in a significant difference in the generation times of the common trigger source in the primary system that are calculated based on data portions transmitted by these sensors from those calculated based on other sensors. Therefore, such significantly different results can be further eliminated. For example, a plurality of generation time values of the common trigger source in the primary system that are calculated for the N sensors may be subtracted from each other to obtain a plurality of difference data, which are obtained through individual subtractions of each sensor from the other N-1 sensors. It may be set that if the difference data is greater than a threshold or significantly greater than a plurality of difference data for the other sensors, the calculation result for that sensor is eliminated. As a result, some values that differ significantly due to failures or other reasons are eliminated from the values of the generation times of the trigger signals from the common trigger source in the primary system finally incorporated for the step S3. This ensures that the reference finally used for the adjustment of the backup systems in the step S3 is more accurate, thereby further improving the accuracy of the method 100.

Similar to the above embodiments, in some other embodiments, the step of determining the first time point may, for example, include the following approach: first, performing the step S1 for each of the one or more backup systems to obtain one or more first time points; and using an average of the obtained one or more first time points as the first time point for the step S2. That is, with reference to the above calculation of a T_{M} for each sensor, a first time point T1 may also be calculated for each backup system, such that a plurality of T1 values are obtained for the plurality of backup systems, and an average of the plurality of T1 values is used as the T1 value for subsequent use in the step S2. In this way, T1 may be determined based on an average calculated for some or all of the backup systems, making the obtained average T1 for the plurality of backup systems better suited to handle other potential errors caused by the plurality of backup systems. It can be understood that in addition to the average, the median, the mode, or other types of statistical parameters may also be applied as needed.

Therefore, further, in some embodiments, the above step of determining the first time point may further include the following approach: performing the step S1 for each of the one or more backup systems to obtain one or more first time points; removing one or more of the one or more first time points that differ the most from the other first time points; and using any one of one or more first time points remaining after the removal as the first time point for the step S2, or using an average of first time points remaining after the removal as the first time point for the step S2. In some scenarios, one or some of the backup systems may fail, resulting in a significant difference in the first time points that are determined based on data portions transmitted by the one or some of the backup systems from those determined based on other backup systems. Therefore, such significantly different results can be further eliminated. For example, for a plurality of first time points T1 calculated for the plurality of backup systems, a plurality of difference data may be obtained through individual subtractions of each backup system from the other backup systems. It may be set that if the difference data is greater than a threshold or significantly greater than a plurality of difference data for the other backup systems, the calculation result for that backup system is eliminated. As a result, some values that differ significantly due to failures or other reasons are eliminated from the values of the first time points T1 finally incorporated for the step S2. This ensures that the reference finally used for the adjustment of the backup systems in the step S2 is more accurate, thereby further improving the accuracy of the method 100.

It can be understood that the above N sensors may be sensors of the same type or of different types. Sensors of the same type (e.g., various cameras) may have different brands, suppliers, production batches, and other attributes, and therefore there may be variations in the calibrated delay amount among sensors of the same type. Sensors of different types (e.g., cameras and LiDAR) also have different calibrated delay amounts. Therefore, the calibrated delay amount may refer to the delay time/timing/count length, or an applied phase difference, that needs to be considered when timing synchronization of a particular sensor with other sensors, taking into account differences in sensor types or attributes. The calibrated delay amount may, for example, be provided by the supplier or determined in advance by personnel based on specific conditions.

In a particular scenario, the sensor includes a camera, and the first time point for the portion of the data includes a starting time point of a frame transmitted by the camera. This scenario is particularly applicable to, for example, image capture of the environment by a plurality of cameras and synchronization thereof during vehicle driving, which meets the high precision requirements for synchronization of image data, and achieves more accurate alignment of the timing before and after the primary-backup system switch.

In some examples, the synchronizing signal generator includes an fsync signal generator. In particular, for timing synchronization of a plurality of cameras across the primary system and the backup systems, the fsync signal generator enables timing/counting of the trigger signals from the common trigger source, so as to apply a calibrated delay amount for a specific camera, thereby enabling external synchronization control of the primary system and the backup systems. Therefore, although the cameras may come from different suppliers, all sensors (e.g., cameras) can use a single fsync line for external synchronization control; or a number of cameras can be grouped to share a single fsync line for external synchronization control. For example, the timing configuration of the sensors can be performed through a bi-directional two-wire synchronous serial bus (e.g., an I2C) channel accessed through a deserializer. The primary system and the backup systems each have one configuration channel connected to the deserializer.

In some example, the primary system and the one or more backup systems receive the data from the sensor via a mobile industry processor interface (MIPI). Consequently, this enables faster reception of the sensed data, facilitating real-time, fast, and high-frequency implementation of the method 100, meeting the requirements for high-speed data replication and transmission, and fast alignment between the primary system and the standby systems.

It can be understood that the method 100 may further include: in response to activating one of the one or more backup systems, making the activated backup system serve as a new primary system and the original primary system as a backup system. That is, when the original primary system can no longer function effectively due to potential failures, a backup system can take over and become the new primary system, while the original primary system becomes a backup system. Thus, the plurality of systems can more smoothly perform primary-backup system transitions with each other.

According to another aspect of the disclosure, a component for synchronizing a plurality of systems is further provided. The plurality of systems include one primary system and one or more backup systems. The component includes a common trigger source and N synchronizing signal generators provided in each of the plurality of systems, where the N synchronizing signal generators are used for providing, based on a trigger signal from the common trigger source and respective calibrated delay amounts of N sensors corresponding to the N synchronizing signal generators, corresponding synchronizing signal control for the N sensors, with N being a positive integer greater than or equal to 1.

The component is configured to perform the following operations: determining, for one of the N sensors and based on data received from the sensor by one of the one or more backup systems, a first time point for a portion of the data; determining a generation time of a trigger signal from a common trigger source in the primary system based on a calibrated delay amount for the sensor and the first time point; and adjusting generation times of subsequent trigger signals from common trigger sources in some or all of the one or more backup systems based on the generation time of the trigger signal from the common trigger source in the primary system. For example, these operations may be performed by a processing unit and a storage unit provided outside the component or included in the component, where the storage unit stores instructions corresponding to the method 100 of any one of the above embodiments, and the processing unit, when executing the instructions, performs the above steps or the steps of the method 100.

In some embodiments, the component may further include a selector. The selector may activate one of the one or more backup systems through selection to make the activated backup system serve as a new primary system and the original primary system as a backup system.

In some other embodiments, data from the plurality of sensors is received via a deserializer, and replicated by the deserializer to produce a plurality of copies for distribution to the primary system and the one or more backup systems.

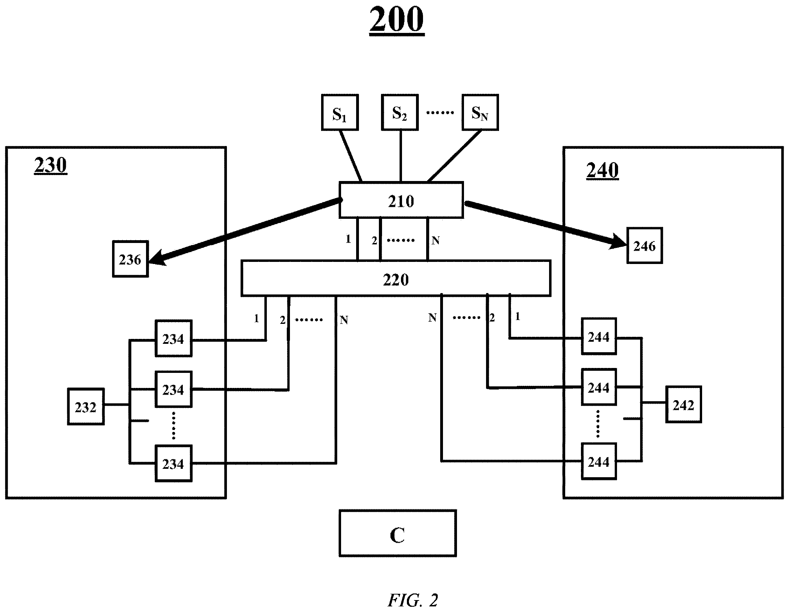

With reference to FIG. 2, a schematic module diagram 200 for synchronizing a plurality of systems according to some embodiments is shown, which includes the above component for synchronizing a plurality of systems. In FIG. 2, an example is given with one primary system and one backup system, where S₁-S_{N} represent N sensors (e.g., N cameras), 210 represents an optional deserializer, and 220 represents a selector. The primary system 230 includes a high-speed data interface (e.g., an MIPI interface, a low-voltage differential signaling (LVDS) interface, or a digital video port (DVP) interface) 236, a common trigger source 232, and N synchronizing signal generators (e.g., fsync signal generators) 234. Similarly, the backup system 240 includes a high-speed data interface (e.g., an MIPI interface) 246, a common trigger source 242, and N synchronizing signal generators (e.g., fsync signal generators) 244, which correspond to those in the primary system 230. During normal operation, the selector 220 selects to connect the timing control of the sensors S₂-S_{N} to the N synchronizing signal generators 234 in the primary system 230, and the deserializer 220 replicates data from the sensors S₂-S_{N} to produce two copies and distributes them separately to the high-speed data interfaces 236 and 246, thereby ensuring that the primary system and the backup system have the same sensed data. When the primary system 230 fails, for example, the selector 220 is controlled by the controller C (e.g., a main control unit (MCU)) to select and activate the backup system 240, thereby selecting to connect the timing control of the sensors S₂-S_{N} to the N synchronizing signal generators 234 in the backup system 240. At this point, the backup system 240 becomes the primary system. Conversely, when the system 240 fails, the normal system 230 can take over and become the primary system again.

Based on a time point of a portion of the data received by the high-speed data interface 246 (e.g., a starting time point x2 of an x^{th} frame of video data), the backup system 240 may calculate (determine), for a sensor, and its corresponding synchronizing signal generator 234 in the primary system 230, a generation time of a trigger signal from the common trigger source 232 in the primary system 230 for the x^{th} frame based on the time point x2 and a calibrated delay amount for the sensor. The generation time of the trigger signal from the common trigger source 232 for the x^{th} frame is compared and matched with the generation time of the trigger signal from the common trigger source 242 in the backup system 240 for the x^{th} frame to calculate a difference. Thus, the generation times of trigger signals from the common trigger source 242 in the backup system 240 for subsequent frames following the x^{th} frame are adjusted with reference to the difference. For example, the trigger time of an (x+1)^{th} frame of the backup system 240 is adjusted to align with the trigger time of an (x+1)^{th} frame of the primary system 230.

In this way, the timing control of the sensed data by the backup system 240 can be aligned with that by the primary system 230, thereby facilitating a smooth switch of sensor control during the primary-backup system switch process. For example, during the handover of control over a plurality of cameras, when the control is switched between the primary and backup systems, the problem of misalignment or even frame loss of the first frame under the backup system due to the synchronizing signal generator of the backup system not triggering a new first frame according to the original period can be avoided.

Furthermore, compared with a solution in which the generation of the synchronizing signal is performed by a controller (e.g., an MCU), various embodiments of the disclosure avoid or alleviate, for example, the following problems. Since the generation of the synchronizing signal is not on the same processing chip (e.g., the same system-on-chip (SOC)) as the user control of the sensor, the MCU cannot more precisely track or dynamically adjust the synchronizing signal accurately based on the processing chip handling the user control of the sensor. For example, when the processing chip needs to adjust the delay, alignment, and generation time of the synchronizing signal based on specific conditions (e.g., an adjustment to the sensing frequency due to an environmental change sensed by the sensor), the synchronizing signal generator located on another MCU may not be able to make corresponding adjustments in time in response to such adjustments. In contrast, a solution in which high-frequency data reception and generation of the synchronizing time signal are both handled on the same processing chip can facilitate the association of the synchronizing signal generator with other processing of the processing chip, thereby enabling timely adaptive adjustments in response to the adjustment of the processing chip. In addition, only the times of the common trigger sources need to be aligned and adjusted uniformly, thereby avoiding overly high requirements on the scheduling and program execution of the controller (such as an MCU/CPU).

It should be noted that the primary system and the backup system correspond to the same group of sensors in the above description, but it is also possible that the primary system corresponds to one group of sensors and the backup system corresponds to only a subset of the group of sensors. For example, the primary system corresponds to sensors 1-N, while the backup system corresponds to only M sensors (M is a positive integer less than N).

According to another aspect of the disclosure, an electronic device is further provided. The electronic device includes a memory and a processor, where the memory stores instructions which, when executed by the processor, implement the method 100 according to any one of the aforementioned embodiments.

According to another aspect of the disclosure, a computer-readable storage medium storing instructions is further provided, where the instructions, when run, perform the method 100 according to any one of the embodiments of the disclosure.

The computer-readable storage medium, memory, storage unit, etc., in the disclosure include various types of computer-readable storage media, and may be any usable media accessible to a general-purpose or special-purpose computer. For example, the computer-readable medium may include a RAM, a ROM, an EPROM, an E²PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. A combination thereof shall also fall within the scope of protection of the computer-readable media. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete components in a user terminal.

According to another aspect of the disclosure, there is further provided an autonomous driving system. The autonomous driving system includes the component for synchronizing a plurality of systems according to any one of the aforementioned embodiments. The autonomous driving system may, for example, include an advanced driving assistance system (ADAS) system, or other driving systems designed to meet high-level functional safety requirements for fail-operation.

According to yet another aspect of the disclosure, there is further provided a vehicle including the autonomous driving system according to any one of the embodiments of the disclosure or including the component for synchronizing a plurality of systems according to any one of the embodiments of the disclosure. The vehicle in the disclosure is intended to indicate any suitable vehicle having a drive system, for example, a fuel-powered vehicle, a hybrid vehicle, an electric vehicle, a plug-in hybrid electric vehicle, and the like.

The above descriptions mainly illustrate the method and the component for synchronizing a plurality of systems, the computer-readable storage medium, the electronic device, the autonomous driving system, and the vehicle according to the disclosure. Although only some specific implementations of the disclosure are described, a person of ordinary skill in the art should understand that the disclosure may be implemented in many other forms without departing from the essence and scope of the disclosure. Accordingly, the presented examples and implementations are considered to be illustrative rather than restrictive, and the disclosure may encompass various modifications and replacements without departing from the scope of the disclosure that is defined by the appended claims.

## Claims

1. A method for synchronizing a plurality of systems, wherein the method is used for synchronization of control timing of N sensors across the plurality of systems, wherein the plurality of systems comprise one primary system and one or more backup systems, and each of the plurality of systems comprises one common trigger source and N synchronizing signal generators corresponding to the N sensors, the common trigger source providing a trigger signal for the N synchronizing signal generators, and the N synchronizing signal generators providing synchronizing signal control for the corresponding N sensors, with N being a positive integer greater than or equal to 1, the method comprising the following steps:
S1: determining, for one of the N sensors and based on data received from the sensor by one of the one or more backup systems, a first time point for a portion of the data;
S2: determining a generation time of a trigger signal from a common trigger source in the primary system based on a calibrated delay amount for the sensor and the first time point; and
S3: adjusting generation times of subsequent trigger signals from common trigger sources in some or all of the one or more backup systems based on the generation time of the trigger signal from the common trigger source in the primary system.

2. The method according to claim 1, wherein the step S2 further comprises:
determining a generation time of a synchronizing signal from the synchronizing signal generator in the primary system that corresponds to the sensor based on the calibrated delay amount for the sensor and the first time point; and
determining the generation time of the trigger signal from the common trigger source in the primary system based on the generation time of the synchronizing signal in the primary system.

3. The method according to claim 1 or 2, wherein the step S3 further comprises:
determining a difference between the generation time of the trigger signal from the common trigger source in the primary system and a generation time of a trigger signal from a common trigger source in each of the one or more backup systems based on the determined generation time of the trigger signal from the common trigger source in the primary system; and
adjusting a generation time of a subsequent trigger signal from a common trigger source in the backup system for which the difference is greater than a preset threshold among the one or more backup systems, so as to align with a generation time of a corresponding subsequent trigger signal from the common trigger source in the primary system.

4. The method according to any one of claims 1 to 3, wherein the step of determining a generation time of a trigger signal from a common trigger source in the primary system further comprises:
performing the steps S1 and S2 for each of the N sensors to obtain N generation times of the trigger signal from the common trigger source in the primary system; and
using an average of the N generation times of the trigger signal from the common trigger source in the primary system as the generation time of the trigger signal from the common trigger source in the primary system for the step S3.

5. The method according to any one of claims 1 to **4,** wherein the step of determining a generation time of a trigger signal from a common trigger source in the primary system further comprises:
performing the steps S1 and S2 for each of the N sensors to obtain N generation times of the trigger signal from the common trigger source in the primary system; and
removing one or more of the N generation times that differ the most from the other N-1 of the generation times; and
using any one of one or more generation times remaining after the removal as the generation time of the trigger signal from the common trigger source in the primary system for the step S3, or using an average of one or more generation times remaining after the removal as the generation time of the trigger signal from the common trigger source in the primary system for the step S3.

6. The method according to any one of claims 1 to 5, wherein the step of determining a first time point further comprises:
performing the step S1 for each of the one or more backup systems to obtain one or more first time points; and
using an average of the obtained one or more first time points as the first time point for the step S2.

7. The method according to any one of claims 1 to 6, wherein the step of determining a first time point further comprises:
performing the step S1 for each of the one or more backup systems to obtain one or more first time points; and
removing one or more of the one or more first time points that differ the most from the other first time points; and
using any one of one or more first time points remaining after the removal as the first time point for the step S2, or using an average of first time points remaining after the removal as the first time point for the step S2.

8. The method according to any one of claims 1 to 7, wherein the N sensors are different types of sensors, and/or wherein the sensor comprises a camera, and the first time point for the portion of the data comprises a starting time point of a frame transmitted by the camera.

9. The method according to any one of claims 1 to 8, wherein the synchronizing signal generator comprises an fsync signal generator, and/or wherein the primary system and the one or more backup systems receive the data from the sensor via a mobile industry processor interface, MIPI.

10. The method according to any one of claims 1 to 9, further comprising:
making, in response to activating one of the one or more backup systems, the activated backup system serve as a new primary system and the original primary system as a backup system.

11. A component for synchronizing a plurality of systems, wherein the plurality of systems comprise one primary system (230) and one or more backup systems (240), the component comprising:
a common trigger source (232, 242) and N synchronizing signal generators (234) provided in each of the plurality of systems, wherein the N synchronizing signal generators are configured to provide, based on a trigger signal from the common trigger source, and respective calibrated delay amounts for N sensors corresponding to the N synchronizing signal generators, corresponding synchronizing signal control for the N sensors, with N being a positive integer greater than or equal to 1,
wherein the component is configured to perform the following operations:
determining, for one of the N sensors and based on data received from the sensor by one of the one or more backup systems, a first time point for a portion of the data;
determining a generation time of a trigger signal from a common trigger source in the primary system based on a calibrated delay amount for the sensor and the first time point; and
adjusting generation times of subsequent trigger signals from common trigger sources in some or all of the one or more backup systems based on the generation time of the trigger signal from the common trigger source in the primary system,
preferably, the component further comprising:
a selector that activates one of the one or more backup systems to make the activated backup system serve as a new primary system and the original primary system as a backup system.

12. A computer-readable storage medium, wherein the computer-readable storage medium stores instructions which, when executed by a processor, implement the method according to any one of claims 1 to 10.

13. An electronic device, comprising a memory and a processor, wherein the memory stores instructions which, when executed by the processor, implement the method according to any one of claims 1 to 10.

14. An autonomous driving system, comprising the component according to claim 11.

15. A vehicle, comprising the component according to claim 11, or the autonomous driving system according to claim 14.

## Patentansprüche

1. Verfahren zum Synchronisieren mehrerer Systeme, wobei das Verfahren zur Synchronisation eines Steuerzeitpunkts von N Sensoren über die mehreren Systeme hinweg verwendet wird, wobei die mehreren Systeme ein Primärsystem und ein oder mehrere Sicherungssysteme umfassen und jedes der mehreren Systeme eine gemeinsame Auslöserquelle und N Synchronisationssignalgeneratoren umfasst, die den N Sensoren entsprechen, wobei die gemeinsame Auslöserquelle ein Auslösersignal für die N Synchronisationssignalgeneratoren bereitstellt, und wobei die N Synchronisationssignalgeneratoren eine Synchronisationssignalsteuerung für die entsprechenden N Sensoren bereitstellen, wobei N eine positive ganze Zahl größer oder gleich 1 ist, wobei das Verfahren die folgenden Schritte umfasst:
S1: Bestimmen, für einen der N Sensoren und basierend auf Daten, die von dem Sensor durch eines der ein oder mehreren Sicherungssysteme empfangen werden, eines ersten Zeitpunkts für einen Teil der Daten;
S2: Bestimmen einer Erzeugungszeit eines Auslösersignals von einer gemeinsamen Auslöserquelle in dem Primärsystem basierend auf einem kalibrierten Verzögerungsbetrag für den Sensor und den ersten Zeitpunkt; und
S3: Anpassen von Erzeugungszeiten von nachfolgenden Auslösersignalen von gemeinsamen Auslöserquellen in einigen oder allen der ein oder mehreren Sicherungssysteme basierend auf der Erzeugungszeit des Auslösersignals von der gemeinsamen Auslöserquelle in dem Primärsystem.

2. Verfahren nach Anspruch 1, wobei der Schritt S2 ferner Folgendes umfasst:
Bestimmen einer Erzeugungszeit eines Synchronisationssignals von dem Synchronisationssignalgenerator in dem Primärsystem, die dem Sensor entspricht, basierend auf dem kalibrierten Verzögerungsbetrag für den Sensor und dem ersten Zeitpunkt; und
Bestimmen der Erzeugungszeit des Auslösersignals von der gemeinsamen Auslöserquelle in dem Primärsystem basierend auf der Erzeugungszeit des Synchronisationssignals in dem Primärsystem.

3. Verfahren nach Anspruch 1 oder 2, wobei der Schritt S3 ferner Folgendes umfasst:
Bestimmen einer Differenz zwischen der Erzeugungszeit des Auslösersignals von der gemeinsamen Auslöserquelle in dem Primärsystem und einer Erzeugungszeit eines Auslösersignals von einer gemeinsamen Auslöserquelle in jedem der ein oder mehreren Sicherungssysteme basierend auf der bestimmten Erzeugungszeit des Auslösersignals von der gemeinsamen Auslöserquelle in dem Primärsystem; und
Anpassen einer Erzeugungszeit eines nachfolgenden Auslösersignals von einer gemeinsamen Auslöserquelle in dem Sicherungssystem, für die die Differenz größer als eine voreingestellte Schwelle unter den ein oder mehreren Sicherungssystemen ist, um sich mit einer Erzeugungszeit eines entsprechenden nachfolgenden Auslösersignals von der gemeinsamen Auslöserquelle in dem Primärsystem auszurichten.

4. Verfahren nach einem der Ansprüche 1 bis 3, wobei der Schritt des Bestimmens einer Erzeugungszeit eines Auslösersignals von einer gemeinsamen Auslöserquelle in dem Primärsystem ferner Folgendes umfasst:
Durchführen der Schritte S1 und S2 für jeden der N Sensoren, um N Erzeugungszeiten des Auslösersignals von der gemeinsamen Auslöserquelle in dem Primärsystem zu erhalten; und
Verwenden eines Mittelwerts der N Erzeugungszeiten des Auslösersignals von der gemeinsamen Auslöserquelle in dem Primärsystem als die Erzeugungszeit des Auslösersignals von der gemeinsamen Auslöserquelle in dem Primärsystem für den Schritt S3.

5. Verfahren nach einem der Ansprüche 1 bis 4, wobei der Schritt des Bestimmens einer Erzeugungszeit eines Auslösersignals von einer gemeinsamen Auslöserquelle in dem Primärsystem ferner Folgendes umfasst:
Durchführen der Schritte S1 und S2 für jeden der N Sensoren, um N Erzeugungszeiten des Auslösersignals von der gemeinsamen Auslöserquelle in dem Primärsystem zu erhalten; und
Entfernen einer oder mehrerer der N Erzeugungszeiten, die sich am meisten von den anderen N-1 der Erzeugungszeiten unterscheiden; und
Verwenden einer beliebigen von einer oder mehreren Erzeugungszeiten, die nach der Entfernung verbleiben, als die Erzeugungszeit des Auslösersignals von der gemeinsamen Auslöserquelle in dem Primärsystem für den Schritt S3 oder Verwenden eines Mittelwerts von einer oder mehreren Erzeugungszeiten, die nach der Entfernung verbleiben, als die Erzeugungszeit des Auslösersignals von der gemeinsamen Auslöserquelle in dem Primärsystem für den Schritt S3.

6. Verfahren nach einem der Ansprüche 1 bis 5, wobei der Schritt des Bestimmens eines ersten Zeitpunkts ferner Folgendes umfasst:
Durchführen des Schritts S1 für jedes der ein oder mehreren Sicherungssysteme, um einen oder mehrere erste Zeitpunkte zu erhalten; und
Verwenden eines Mittelwerts der ein oder mehreren erhaltenen ersten Zeitpunkte als den ersten Zeitpunkt für den Schritt S2.

7. Verfahren nach einem der Ansprüche 1 bis 6, wobei der Schritt des Bestimmens eines ersten Zeitpunkts ferner Folgendes umfasst:
Durchführen des Schritts S1 für jedes der ein oder mehreren Sicherungssysteme, um einen oder mehrere erste Zeitpunkte zu erhalten; und
Entfernen eines oder mehrerer der ein oder mehreren ersten Zeitpunkte, die sich am meisten von den anderen ersten Zeitpunkten unterscheiden; und
Verwenden eines beliebigen von einem oder mehreren ersten Zeitpunkten, die nach der Entfernung verbleiben, als den ersten Zeitpunkt für den Schritt S2 oder Verwenden eines Durchschnitts von ersten Zeitpunkten, die nach der Entfernung verbleiben, als den ersten Zeitpunkt für den Schritt S2.

8. Verfahren nach einem der Ansprüche 1 bis 7, wobei die N Sensoren unterschiedliche Arten von Sensoren sind und/oder wobei der Sensor eine Kamera umfasst und der erste Zeitpunkt für den Teil der Daten einen Startzeitpunkt eines durch die Kamera übertragenen Rahmens umfasst.

9. Verfahren nach einem der Ansprüche 1 bis 8, wobei der Synchronisationssignalgenerator einen fsync-Signalgenerator umfasst und/oder wobei das Primärsystem und das eine oder die mehreren Sicherungssysteme die Daten von dem Sensor über eine Mobilindustrieprozessorschnittstelle, MIPI, empfangen.

10. Verfahren nach einem der Ansprüche 1 bis 9, ferner umfassend:
Veranlassen, als Reaktion auf das Aktivieren eines der ein oder mehreren Sicherungssysteme, dass das aktivierte Sicherungssystem als neues Primärsystem und das ursprüngliche Primärsystem als Sicherungssystem dient.

11. Komponente zum Synchronisieren mehrerer Systeme, wobei die mehreren Systeme ein Primärsystem (230) und ein oder mehrere Sicherungssysteme (240) umfassen, wobei die Komponente Folgendes umfasst:
eine gemeinsame Auslöserquelle (232, 242) und N Synchronisationssignalgeneratoren (234), die in jedem der mehreren Systeme bereitgestellt sind, wobei die N Synchronisationssignalgeneratoren dazu ausgelegt sind, basierend auf einem Auslösersignal von der gemeinsamen Auslöserquelle und jeweiligen kalibrierten Verzögerungsbeträgen für N Sensoren, die den N Synchronisationssignalgeneratoren entsprechen, eine entsprechende Synchronisationssignalsteuerung für die N Sensoren bereitzustellen, wobei N eine positive ganze Zahl größer als oder gleich 1 ist,
wobei die Komponente dazu ausgelegt ist, die folgenden Operationen durchzuführen:
Bestimmen, für einen der N Sensoren und basierend auf Daten, die von dem Sensor durch eines der ein oder mehreren Sicherungssysteme empfangen werden, eines ersten Zeitpunkts für einen Teil der Daten;
Bestimmen einer Erzeugungszeit eines Auslösersignals von einer gemeinsamen Auslöserquelle in dem Primärsystem basierend auf einem kalibrierten Verzögerungsbetrag für den Sensor und den ersten Zeitpunkt; und
Anpassen von Erzeugungszeiten von nachfolgenden Auslösersignalen von gemeinsamen Auslöserquellen in einigen oder allen der ein oder mehreren Sicherungssysteme basierend auf der Erzeugungszeit des Auslösersignals von der gemeinsamen Auslöserquelle in dem Primärsystem.
wobei die Komponente vorzugsweise Folgendes umfasst:
einen Selektor, der eines der ein oder mehreren Sicherungssysteme aktiviert, um zu veranlassen, dass das aktivierte Sicherungssystem als neues Primärsystem und das ursprüngliche Primärsystem als Sicherungssystem dient.

12. Computerlesbares Speichermedium, wobei das computerlesbare Speichermedium Anweisungen speichert, die, wenn sie durch einen Prozessor ausgeführt werden, das Verfahren nach einem der Ansprüche 1 bis 10 implementieren.

13. Elektronische Vorrichtung, die einen Speicher und einen Prozessor umfasst, wobei der Speicher Anweisungen speichert, die, wenn sie durch den Prozessor ausgeführt werden, das Verfahren nach einem der Ansprüche 1 bis 10 implementieren.

14. Autonomes Fahrsystem, das die Komponente nach Anspruch 11 umfasst.

15. Fahrzeug, umfassend die Komponente nach Anspruch 11 oder das autonome Fahrsystem nach Anspruch 14.

## Revendications

1. Procédé de synchronisation d'une pluralité de systèmes, le procédé étant utilisé pour synchroniser la temporisation de la commande de N capteurs sur la pluralité de systèmes, la pluralité de systèmes comprenant un système primaire et un ou plusieurs systèmes de secours, et chacun de la pluralité de systèmes comprenant une source de déclenchement commune et N générateurs de signal de synchronisation correspondant aux N capteurs, la source de déclenchement commune fournissant un signal de déclenchement pour les N générateurs de signal de synchronisation, et les N générateurs de signal de synchronisation assurant une commande de signal de synchronisation pour les N capteurs correspondants, N étant un entier positif supérieur ou égal à 1, le procédé comprenant les étapes suivantes consistant à :
S1 : déterminer pour l'un des N capteurs et à partir de données reçues du capteur par l'un parmi le ou les systèmes de secours un premier point temporel pour une partie des données,
S2 : déterminer un temps de génération d'un signal de déclenchement à partir d'une source de déclenchement commune dans le système primaire sur la base d'une quantité de retard calibrée pour le capteur et du premier point temporel, et
S3 : ajuster des temps de génération de signaux de déclenchement ultérieurs provenant de sources de déclenchement communes dans certains ou tous les systèmes de secours en fonction du temps de génération du signal de déclenchement provenant de la source de déclenchement commune dans le système primaire.

2. Procédé selon la revendication 1, l'étape S2 comprenant en outre les étapes consistant à :
déterminer un temps de génération d'un signal de synchronisation à partir du générateur de signal de synchronisation dans le système primaire qui correspond au capteur sur la base de la quantité de retard calibrée pour le capteur et du premier point temporel ; et
déterminer le temps de génération du signal de déclenchement provenant de la source de déclenchement commune dans le système primaire sur la base du temps de génération du signal de synchronisation dans le système primaire.

3. Procédé selon la revendication 1 ou 2, l'étape S3 comprenant en outre les étapes consistant à :
déterminer une différence entre le temps de génération du signal de déclenchement provenant de la source de déclenchement commune dans le système primaire et un temps de génération d'un signal de déclenchement à partir d'une source de déclenchement commune dans chacun du ou des systèmes de secours sur la base du temps de génération déterminé du signal de déclenchement provenant de la source de déclenchement commune dans le système primaire ; et
ajuster un temps de génération d'un signal de déclenchement ultérieur à partir d'une source de déclenchement commune dans le système de secours pour lequel la différence est supérieure à un seuil prédéfini parmi le ou les systèmes de secours, de sorte à s'aligner avec un temps de génération d'un signal de déclenchement ultérieur correspondant provenant de la source de déclenchement commune dans le système primaire.

4. Procédé selon l'une quelconque des revendications 1 à 3, l'étape de détermination d'un temps de génération d'un signal de déclenchement à partir d'une source de déclenchement commune dans le système primaire comprenant en outre les étapes consistant à :
effectuer les étapes S1 et S2 pour chacun des N capteurs pour obtenir N temps de génération du signal de déclenchement provenant de la source de déclenchement commune dans le système primaire, et
utiliser une moyenne des N temps de génération du signal de déclenchement provenant de la source de déclenchement commune dans le système primaire comme temps de génération du signal de déclenchement provenant de la source de déclenchement commune dans le système primaire pour l'étape S3.

5. Procédé selon l'une quelconque des revendications 1 à 4, l'étape de détermination d'un temps de génération d'un signal de déclenchement à partir d'une source de déclenchement commune dans le système primaire comprenant en outre les étapes consistant à :
effectuer les étapes S1 et S2 pour chacun des N capteurs pour obtenir N temps de génération du signal de déclenchement provenant de la source de déclenchement commune dans le système primaire, et
supprimer un ou plusieurs des N temps de génération qui diffèrent le plus de l'autre N-1 des temps de génération ; et
utiliser l'un quelconque du ou des temps de génération restant après la suppression comme temps de génération du signal de déclenchement provenant de la source de déclenchement commune dans le système primaire pour l'étape S3, ou utiliser une moyenne du ou des temps de génération restant après la suppression comme temps de génération du signal de déclenchement provenant de la source de déclenchement commune dans le système primaire pour l'étape S3.

6. Procédé selon l'une quelconque des revendications 1 à 5, l'étape de détermination d'un premier point temporel comprenant en outre les étapes consistant à :
effectuer l'étape S1 pour chacun du ou des systèmes de secours pour obtenir un ou plusieurs premiers points temporels ; et
utiliser une moyenne du ou des premiers points temporels obtenus comme premier point temporel pour l'étape S2.

7. Procédé selon l'une quelconque des revendications 1 à 6, l'étape de détermination d'un premier point temporel comprenant en outre les étapes consistant à :
effectuer l'étape S1 pour chacun du ou des systèmes de secours pour obtenir un ou plusieurs premiers points temporels ; et
supprimer un ou plusieurs du ou des premiers points temporels qui diffèrent le plus des autres premiers points temporels ; et
utiliser l'un quelconque du ou des points temporels restant après la suppression comme premier point temporel pour l'étape S2, ou utiliser une moyenne de premiers points temporels restant après la suppression comme premier point temporel pour l'étape S2.

8. Procédé selon l'une quelconque des revendications 1 à 7, les N capteurs étant différents types de capteurs, et/ou le capteur comprenant une caméra, et le premier point temporel pour la partie des données comprenant un point temporel de départ d'une image transmise par la caméra.

9. Procédé selon l'une quelconque des revendications 1 à 8, le générateur de signal de synchronisation comprenant un générateur de signal fsync, et/ou le système primaire et le ou les systèmes de secours recevant les données provenant du capteur par l'intermédiaire d'une interface de processeur industriel mobile, MIPI.

10. Procédé selon l'une quelconque des revendications 1 à 9, comprenant en outre l'étape consistant à :
amener, en réponse à l'activation de l'un parmi le ou les systèmes de secours, le système de secours activé à servir de nouveau système primaire et le système primaire d'origine de système de secours.

11. Composant pour la synchronisation d'une pluralité de systèmes, la pluralité de systèmes comprenant un système primaire (230) et un ou plusieurs systèmes de secours (240), le composant comprenant :
une source de déclenchement commune (232, 242) et N générateurs de signal de synchronisation (234) situés dans chacun de la pluralité de systèmes, les N générateurs de signal de synchronisation étant configurés pour fournir, sur la base d'un signal de déclenchement provenant de la source de déclenchement commune, et des quantités de retard calibrées respectives pour N capteurs correspondant aux N générateurs de signal de synchronisation, une commande de signal de synchronisation correspondante pour les N capteurs, N étant un entier positif supérieur ou égal à 1,
le composant étant conçu pour réaliser les opérations suivantes :
déterminer pour un des N capteurs et à partir de données reçues du capteur par l'un parmi le ou les systèmes de secours un premier point temporel pour une partie des données,
déterminer un temps de génération d'un signal de déclenchement à partir d'une source de déclenchement commune dans le système primaire sur la base d'une quantité de retard calibrée pour le capteur et du premier point temporel, et
ajuster des temps de génération de signaux de déclenchement ultérieurs provenant de sources de déclenchement communes dans certains ou tous les systèmes de secours en fonction du temps de génération du signal de déclenchement provenant de la source de déclenchement commune dans le système primaire.
de préférence, le composant comprenant en outre :
un sélecteur qui active l'un parmi le ou les systèmes de secours pour amener le système de secours activé à servir de nouveau système primaire et le système primaire d'origine de système de secours.

12. Support de stockage lisible par ordinateur, le support de stockage lisible par ordinateur stockant des instructions qui, lorsqu'elles sont exécutées par un processeur, mettent en œuvre le procédé selon l'une quelconque des revendications 1 à 10.

13. Dispositif électronique, comprenant une mémoire et un processeur, la mémoire stockant des instructions qui, lorsqu'elles sont exécutées par le processeur, mettent en œuvre le procédé selon l'une quelconque des revendications 1 à 10.

14. Système de conduite autonome, comprenant le composant selon la revendication 11.

15. Véhicule, comprenant le composant selon la revendication 11, ou le système de conduite autonome selon la revendication 14.
